**Europäisches Patentamt**

**European Patent Office**

**Office européen des brevets**

(11) Veröffentlichungsnummer: **0 278 056**
**A1**

(12) **EUROPÄISCHE PATENTANMELDUNG**

(21) Anmeldenummer: **87115537.0**

(22) Anmeldetag: **23.10.87**

(51) Int. Cl.⁴: **G01P 15/08 , G01L 5/26**

(30) Priorität: **17.01.87 DE 3701295**

(43) Veröffentlichungstag der Anmeldung:
**17.08.88 Patentblatt 88/33**

(84) Benannte Vertragsstaaten:
**CH DE FR GB IT LI SE**

(71) Anmelder: **Messerschmitt-Bölkow-Blohm Gesellschaft mit beschränkter Haftung**
**Robert-Koch-Strasse**
**D-8012 Ottobrunn(DE)**

(72) Erfinder: **Spies, Hans**
**Schiessstätte 12**
**D-8068 Pfaffenhofen(DE)**
Erfinder: **Spies, Martin**
**Am Berg 4 Affalterbach**
**D-8068 Pfaffenhofen 1(DE)**
Erfinder: **Laucht, Horst, Dr.**
**Hermann-Löns-Weg 16**
**D-8206 Bruckmühl(DE)**

(54) **Sensor zum Bestimmen von Messgrössen.**

(57) Die Erfindung bezieht sich auf einen Sensor (1) zum Bestimmen einer Meßgröße, wie Lage, Geschwindigkeit oder Beschleunigung. Der Sensor besteht aus einem Sender (S) und mit einem durch diesen berührungslos beeinflußten Empfänger (E), der aus mehreren Einzelempfängern zusammengesetzt ist. Sender und Empfänger sind relativ zueinander beweglich. Die Ausgangssignale des Empfängers werden einer Auswerteschaltung zugeführt. Um den Sensor flexibel, insbesondere in mikroprozessorgesteuerten Schaltungen einsetzen zu können, wird gemäß der Erfindung vorgeschlagen, daß der Empfänger (E) ein elektronischer Matrixspeicher (2) aus einzelnen Speicherzellen (3) ist, der zum Ansteuern und Auslösen der Speicherzellen direkt mit einem Mikroprozessor (5) verbunden ist. Der Matrixspeicher ist ein handelsübliches RAM-Bauelement.

FIG. 1

## Sensor zum Bestimmen von Meßgrößen

Die Erfindung bezieht sich auf einen Sensor für eine Meßgröße wie Lage, Geschwindigkeit oder Beschleunigung gemäß dem Oberbegriff des Patentanspruches 1.

Aus der DE-OS 32 30 615 ist ein solcher Sensor bekannt, der als optoelektronische Kraftmeßeinrichtung verwendet wird. Als Sender wird eine Lichtquelle verwendet, die in einen an einem Ende fest eingespannten biegsamen Lichtleiter Licht einstrahlt. Das freie Ende des Lichtleiters endet knapp oberhalb eines Empfängers, der aus vier Lichtleitern zusammengesetzt ist, deren freien Faserenden in einer Ebene in einem Quadrat angeordnet sind und an deren jeweils anderem Faserende ein Fotosensor angeordnet ist. In der Ruheposition empfangen die freien Faserenden des Empfängers kein Licht oder alle Lichtleiter empfangen den gleichen Lichtanteil. Wird der Lichtleiter aus der Ruheposition ausgelenkt, so ändert sich der in die freien Faserenden des Empfängers eingestrahlte Lichtanteil entsprechend, so daß Betrag und Richtung der Auslenkung des Lichtleiters erfaßt werden können.

Sensoren werden in immer stärkerem Maße in mikroprozessorgesteuerten Systemen eingesetzt. Ein Anwendungsbeispiel ist eine Auslöseschaltung für Sicherheitssysteme in Kraftfahrzeugen, etwa Luftkissen-oder Gurtrückhaltesysteme. Daraus ergibt sich die Forderung nach einer Kommunikationsmöglichkeit zwischen Sensor und Mikroprozessor. Bei dem bekannten Sensor müßten demnach die Empfangssignale einer Signalvorverarbeitung und anschließend einer Analog-Digital-Wandlung unterworfen werden, um schließlich vom Mikroprozessor behandelt werden zu können. Dieser Aufbau ist relativ kompliziert. Außerdem ist es nur mit erheblichem Aufwand möglich, den Sensor an unterschiedliche Anwendungen anzupassen, so daß in der Regel für jeden Anwendungsfall ein hierauf abgestimmter Sensor neu konstruiert werden muß. So müssen z.B. bei den erwähnten Auslöseschaltungen für Sicherheitssysteme in Kraftfahrzeugen die für unterschiedliche Kraftfahrzeuge unterschiedlichen Parameter jeweils neu bestimmt werden. So wären bei dem bekannten Sensor je nach Einbauort im Kraftfahrzeug und Konstruktion des Kraftfahrzeuges die Auslenkungen des Lichtleiters bei ansonsten gleichen Voraussetzungen z.B. bei einer Kollision unterschiedlich.

Der Erfindung liegt die Aufgabe zugrunde, einen Sensor der in Rede stehenden Art anzugeben, der einfach konstruiert ist, der flexibel eingesetzt werden kann und mit dem genauere Messungen durchgeführt werden können.

Diese Aufgabe ist gemäß der Erfindung durch die im kennzeichnenden Teil des Patentanspruches 1 angegebenen Merkmale gelöst.

Demgemäß liegt der Erfindung der Gedanke zugrunde, ein kommerziell in großen Stückzahlen gefertigtes Element hoher Präzision zu verwenden, das gleichzeitig zum direkten Dialog mit einem Mikroprozessor fähig ist. Dieses Element ist ein handelsüblicher elektronischer Matrixspeicher, der aus einer Vielzahl von Speicherzellen zusammengesetzt ist. In Versuchen wurde nachgewiesen, daß in diesen elektronischen Matrixspeicher mit Hilfe von Licht oder über ein elektrostatisches Feld Informationen eingeschrieben werden können, die eine exakte geometrische Position des Senders kodieren und durch die Zykluszeit der Abfrage einer Schwellwertbildung unterworfen werden sowie direkt vom Mikroprozessor ausgelesen werden können. Darüberhinaus ist eine adaptive Schwellwertbildung durch Änderung der Auslese-Zykluszeit sehr einfach möglich. Ein solcher Sensor kann außerdem ohne konstruktive Änderung für viele Anwendungen eingesetzt werden, wobei die für die jeweilige Anwendung maßgeblichen Parameter durch entsprechende Vorgaben im Mikroprozessor berücksichtigt werden.

Der Sender kann z.B. ein einseitig eingespannter, gegebenenfalls an seinem freien Ende oberhalb des Matrixspeichers mit einer Masse versehener Lichtleiter sein, in dessen anderes Ende mit Hilfe einer lichtemittierenden Diode Licht eingestrahlt wird.

Gemäß einer weiteren Ausführungsform kann der Sender als einseitig eingespannter elastischer und elektrisch leitender Stab ausgebildet werden, dessen freies Ende oberhalb des elektronischen Matrixspeichers in einer scharfen Spitze endet. Zwischen Stab und Matrixspeicher wird eine Spannung gelegt, so daß zwischen Spitze und Matrixspeicher ein elektrostatisches Feld aufgebaut wird.

Ebenso kann in Verbindung mit einem Lichtsender eine Masse verwendet werden, die von dem Licht z.B. einer lichtemittierenden Diode durchstrahlt wird und Bereiche unterschiedlicher Transmissions-und/oder Reflexionseigenschaften aufweist. Auf dem elektronischen Matrixspeicher wird dann ein Muster abgebildet, das direkt vom Mikroprozessor ausgelesen werden kann. Bei Verschiebungen der Masse ändert sich entsprechend dieses Muster, so daß die Verschiebungen der Masse ausgewertet werden können.

Bei einem Sensor gemäß der Erfindung ist es zudem möglich, oberhalb des Matrixspeichers mehrere Sender mit unterschiedlichen Charakteristiken anzuordnen, wodurch bei im wesentlichen gleichem Platzbedarf die zu messenden Werte noch feiner und differenzierter bestimmt werden können.

Weitere Ausgestaltungen der Erfindung gehen aus den Unteransprüchen hervor. Die Erfindung ist in Ausführungsbeispielen anhand der Zeichnung näher erläutert. In dieser stelnlen dar:

Figur 1 eine perspektivische Darstellung eines Sensors gemäß der Erfindung mit einem optisch anzusteuernden Matrixspeicher;

Figur 2 eine Teilansicht eines Sensors in einer anderen Ausführungsform mit einem elektrostatisch anzusteubunden Matrixspeicher;

Figur 3 eine perspektivische Darstellung eines weiteren Ausführungsbeispiels eines optischen Doppelsensors;

Figur 4 eine perspektivische Darstellung eines als Winkelkodierer verwendeten Sensors gemäß der Erfindung.

In einem nicht dargestellten Gehäuse eines Sensors 1, der hier als Beschleunigungssensor verwendet wird, ist ein elektronischer Matrixspeicher 2 aus einer Vielzahl von Speicherzellen 3 angeordnet. Dieser Matrixspeicher ist ein handelsüblicher RAM-Baustein. Der Matrixspeicher ist über einen bidirektionalen Datenbus 4 mit einem Mikroprozessor 5 verbunden. Matrixspeicher 2 und Mikroprozessor 5 bilden einen Empfänger E und sind Teil einer hier nicht weiter dargestellten Auswerteschaltung.

Oberhalb des Matrixspeichers 2 sind zwei Lichtsender S1 und S2 vorgesehen. In einem gehäusefesten gestuften Block 6 sind zwei Lichtleiter 7a, 7b unterschiedlicher Länge eingespannt. Die Lichtleiter verlaufen senkrecht zu der Fläche des Matrixspeichers 2 und enden mit ihren feinen Lichtleiterenden 8a, 8b direkt oberhalb der Ebene des Matrix speichers 2. Im Bereich der Lichtleiterenden 8a, 8b sind die Lichtleiter 7a, 7b jeweils mit einer Masse 9a, 9b verbunden. Oberhalb des Blockes 6 werden die beiden Lichtleiter 7a und 7b in Richtung auf eine lichtemittierende Diode 10 geführt, die kontinuierlich Licht in die Lichtleiter einkoppelt. Dieses Licht tritt an den Lichtleiterenden 8a bzw. 8b aus und fällt auf eine der Speicherzellen 3. Diese Speicherzelle wird auf diese Weise aktiviert. Die über den Mikroprozessor 5 auslesbare Adresse der jeweiligen Speicherzelle 3 entspricht der Position der jeweiligen Masse. Werden infolge einer Beschleunigung die Massen aus ihrer Ruhelage ausgelenkt, so verbiegen sich entsprechend die Llchtleiter und das aus den Lichtleiterenden austretende Licht wird auf andere Speicherzellen gelenkt, die dadurch aktiviert werden. die jeweils aktivierten Speicherzellen werden über den Mikroprozessor 5 ausgelesen. Die Positionssignale werden entsprechend ihrer Zeitfolge in Beschleunigungssignale umgewandelt, die über einen bidirektionalen Datenbus 11 weitergegeben werden.

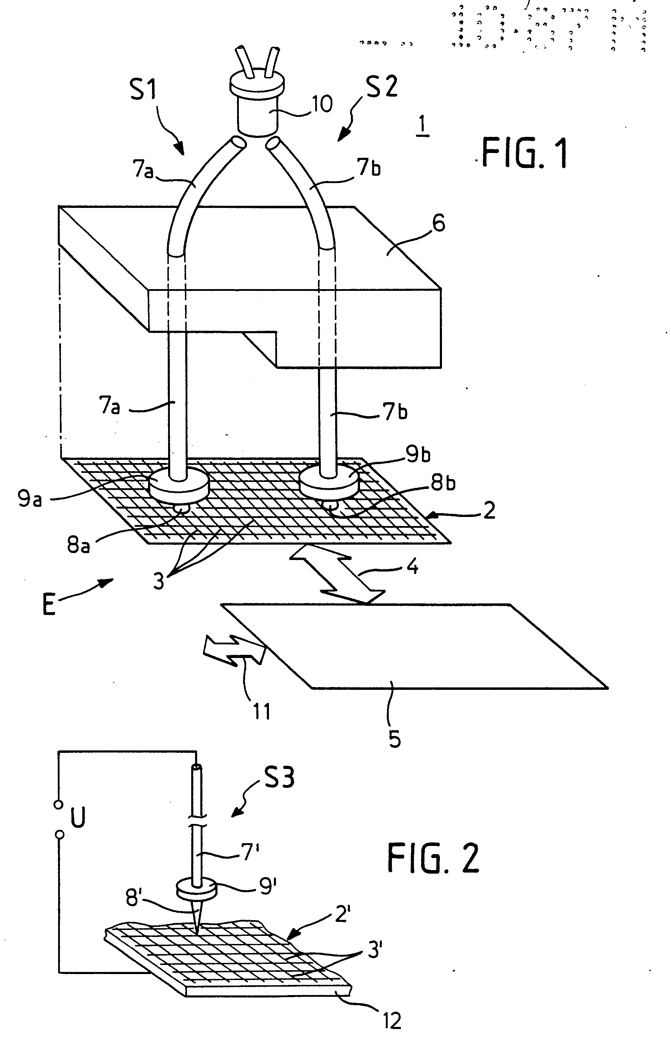

In Figur 2 ist ein Teil eines elektronischen Matrixspeichers 2' mit einem elektrostatisch wirkenden Sender S3 dargestellt, der auf einer elektrisch leitenden Grundplatte 12 angeordnet und wiederum aus einer Vielzahl von Speicherzellen 3' zusammengesetzt ist. Eine Masse 9' ist an einem elastischen, elektrisch leitenden Stab 7' aufgehängt. Das direkt oberhalb der Ebene des Matrixspeichers 2' gelegene Stabende ist als scharfe Spitze 8' ausgebildet. Zwischen Stab 7' und Grundplatte 12 ist eine Spannung U gelegt, die ausreichend ist, daß die direkt unterhalb der Spitze 8' liegende Speicherzelle 3' aktiviert wird. Auslesen und Auswerten der Signale der einzelnen Speicherzellen erfolgt wie oben erläutert.

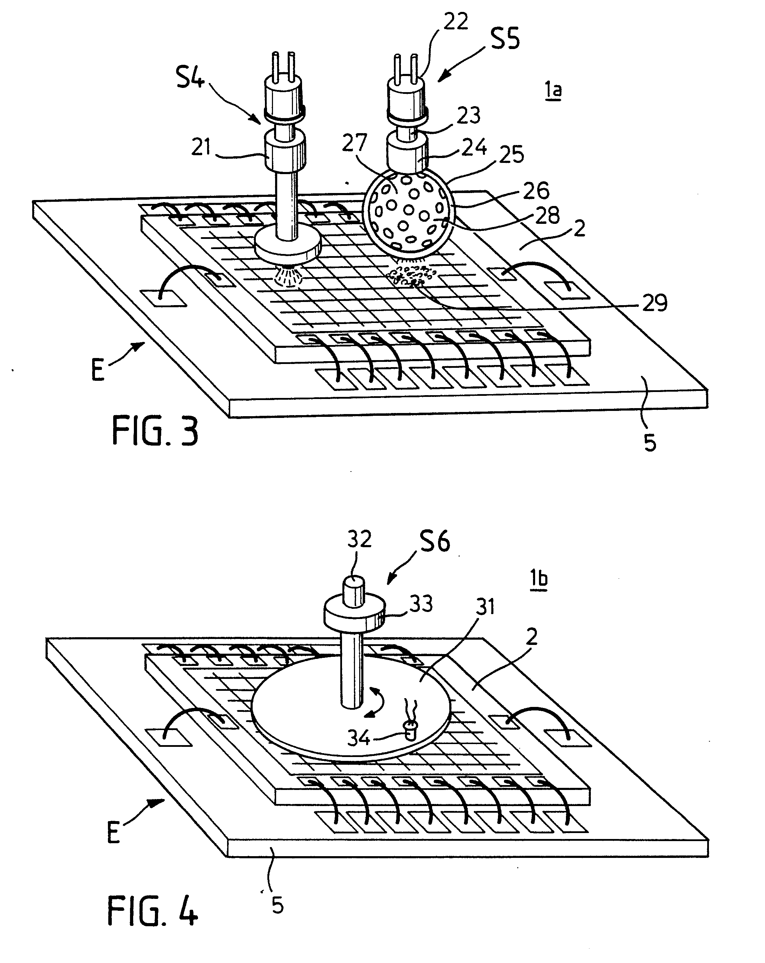

In Figur 3 ist ein Sensor 1a gezeigt, der als Lage-oder Beschleunigungssensor verwendet werden kann. Der Empfänger E ist wie zu Figur 1 aufgebaut, besteht somit aus einem RAM-Matrixspeicher 2 und einem damit verbundenen Mikroprozessor 5. Der Sensor 1a weist zwei Lichtsender S4 und S5 auf. Der Lichtsender S4 ist wie der Sender S1 in Figur 1 aufgebaut, wobei der dort vorgesehene Einspannblock 6 durch einen Ring 21 ersetzt ist. Eine nähere Beschreibung erübrigt sich daher. Die Wirkungsweise des Sensors hinsichtlich dieses Senders S4 ist wie oben beschrieben.

Der Sender S5 weist eine Lichtdiode 22 auf, die in einen Lichtleiter 23 Licht einstrahlt. Der Lichtleiter 23 ist in einem Ring 24 befestigt und optisch mit einer transparenten Hohlkugel 25 verbunden. In dieser Hohlkugel schwimmt in einem Medium 26 eine transparente Kugel 27, die auf ihrer Oberfläche ein Muster 28 aus unterschiedlich transparenten bzw. reflektierenden oder absorbierenden Berichen trägt. Auf dem Matrixspeicher 2 wird dementsprechend ein Lichtmuster 29 abgebildet, das mit Hilfe des Mikroprozessors 5 ausgelesen und ausgewertet werden kann. Wirken auf die Kugel 27 Beschleunigungs-oder Rotationskräfte, so verändert sich die Lage der Kugel 27 in der Hohlkugel 25 und dementsprechend auch das auf dem Matrixspeicher 2 abgebildete Lichtmuster 29. Dieses neue Lichtmuster wird entsprechend ausgewertet.

In Figur 4 ist ein Sensor 1b gezeigt, der als Winkelkodierer verwendbar ist. Der Empfänger E aus Matrixspeicher 2 und Mikroprozessor 5 ist wie beim Ausführungsbeispiel zu Figur 1 aufgebaut. Als Sender S6 dient eine Scheibe 31 mit einer Scheibenebene parallel zu dem Matrixspeicher 2, die mit einer Welle 32 in einem Befestigungsring 33 drehbar gehalten ist, und ferner eine Lichtdiode 34, die auf der Scheibe 31 montiert ist und Licht in Richtung auf den Matrixspeicher 2 strahlt. Je nach Drehstellung der Scheibe 31 werden unterschiedliche Speicherzellen des Matrixspeichers beleuchtet, deren zugehörigen Signale vom Mikroprozessor 5 abgefragt und ausgewertet werden.

Neben den angegebenen Ausführungsbeispielen sind selbstverständlich andere Ausführungsformen möglich, so z.B. Sender, die linear oberhalb des Matrixspeichers verschoben werden können und auf einer langgestreckten Schiene angeordnet sind. Es ist auch möglich, die Lage und die Bewegung des Senders durch andere Meßgrößen zu beeinflussen, Hier sei als Beispiel ein Drucksensor erwähnt, bei dem die Bewegungen einer Druckdose auf einen starr mit dieser verbundenen Sender übertragen wurden. Ebenso ist es möglich, mehrere Lichtquellen in einer Ebene anzuordnen und diese Lichtquellen mit Hilfe einer Optik auf den Matrixspeicher abzubilden.

**Ansprüche**

1. Sensor zum Bestimmen von Meßgrößen, wie Lage, Geschwindigkeit oder Beschleunigung, bestehend aus einem Sender und einem durch diesen berührungslos beeinflußten Empfänger, der aus mehreren Einzelempfängern zusammengesetzt ist, wobei Sender und Empfänger relativ zueinander beweglich sind, dadurch gekennzeichnet, daß der Empfänger (E) ein elektronischer Matrixspeicher (2) aus einzelnen Speicherzellen (3) ist, der zum Ansteuern und Auslesen der Speicherzellen (3) direkt mit einem Mikroprozessor (5) verbunden ist.

2. Sensor nach Anspruch 1, dadurch gekennzeichnet, daß der elektronische Matrixspeicher (2) ein RAM-Bauelement ist.

3. Sensor nach Anspruch 1 oder 2, dadurch gekennzeichnet, daß der Sender ein Lichtsender (S1, S2, S4 bis S6) ist.

4. Sensor nach Anspruch 1 oder 2, dadurch gekennzeichnet, daß der Sender ein ein elektrostatisches Feld zwischen Sender und Matrixspeicher (2') erzeugendes Element (S3) ist.

5. Sensor nach einem der vorhergehenden Ansprüche, dadurch gekennzeichnet, daß der Empfänger (E) ortsfest ist und der Sender (S1 bis S4) mit einem elastischen, in Ruhestellung senkrecht zu der Ebene des Matrixspeichers (2) 2') verlaufenden Stab (7a, 7b, 7') verbunden ist.

6. Sensor nach einem der vorhergehenden Ansprüche, dadurch gekennzeichnet, daß jedem Empfänger (E) mehrere Sender (S1, S2; S4, S5) zugeordnet sind.

7. Sensor nach einem der vorhergehenden Ansprüche, dadurch gekennzeichnet, daß der Sender (S1 bis S4) für eine zweidimensionale flächige Bewegung oberhalb des Matrixspeichers (2) gelagert ist.

8. Sensor nach einem der Ansprüche 1 bis 3, dadurch gekennzeichnet, daß der Sender einen in seiner Lage durch die Meßgröße beeinflußten transparenten Körper (27) aufweist, der Bereiche unterschiedlichen Transmissions-, Reflexions-und/oder Absorptionsgrades aufweist, und daß diesem Körper (27) eine in Richtung auf den Matrixspeicher (2) strahlende Lichtquelle (22) zugeordnet ist.

9. Sensor nach einem der Ansprüche 1 bis 4, dadurch gekennzeichnet, daß der Sender (S6) eine zu der Oberfläche des Matrixspeichers (2) parallele Drehscheibe (31) und einen darauf angeordneten, die Speicherzellen des Matrixspeichers (3) beeinflussenden Geber (34) aufweist.

10. Sensor nach Anspruch 9, dadurch gekennzeichnet, daß der Geber eine Lichtquelle (34) ist.

11. Sensor nach einem der vorhergehenden Ansprüche, dadurch gekennzeichnet, daß der Auslesezyklus für den Empfänger (E) veränderbar ist.

0711553?.0

10:87 M

S1   S2   1   FIG. 1

10

7a   7b

6

7a   7b

9b

9a   8b

8a   2

E

3

4

11

5

S3

U

7'

8'   9'

2'

3'

12

FIG. 2

10 189

S4

22

S5

21

23

27

24

25

26

28

2

29

E

**FIG. 3**

5

32

S6

33

31

2

34

E

1b

**FIG. 4**

5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | IEE PROCEEDINGS SECTION A-I, Band 133, Nr. 2, Teil E, März 1986, Seiten 97-99, Stevenage, Herts, GB; J.G. LACY et al.: "Digital linear transducer using a dynamic RAM" * Seite 97, Spalte 1, Zeilen 21-52; Seite 98, Spalte 1, Zeilen 15-35; Seite 98, Spalte 2, Zeilen 5-35; Figuren 1-3 * | 1-3,8 | G 01 P 15/08 G 01 L 5/26 |
| A | Idem --- | 5,10,11 | |
| A,D | DE-A-3 230 615 (BARTKOWIAK) * Insgesamt; Figuren 1-6 * --- | 1,3,5,7 ,10 | |
| A | WO-A-8 601 931 (PA CONSULTING SERVICES) * Seite 14, Zeile 2 - Seite 15, Zeile 36; Figuren 1,2 * --- | 1-3,8 | |
| A | US-A-4 059 443 (K. OKUMURA) * Spalte 9, Zeile 64 - Spalte 10, Zeile 8; Figur 7 * ----- | 4 | RECHERCHIERTE SACHGEBIETE (Int. Cl.4) G 01 P G 01 L G 01 D G 11 C |

Der vorliegende Recherchenbericht wurde für alle Patentansprüche erstellt

| Recherchenort | Abschlußdatum der Recherche | Prüfer |
|---|---|---|
| DEN HAAG | 27-04-1988 | HANSEN P. |